# EUROPEAN PATENT SPECIFICATION

(11) **EP 0 561 332 B1**
(45) Date of publication and mention of the grant of the patent: **29.05.1996**
(21) Application number: 93104189.1
(22) Date of filing: 15.03.1993
(51) Int. Cl.: B60R 7/06, E05B 65/12

(54) **Safety catch for storage box lid**
Sperrklinke für Staufachdeckel
Cliquet de sécurité pour couvercle de compartiment de rangement

(30) Priority: 16.03.1992 JP 22208/92
(43) Date of publication of application: 22.09.1993
(73) Proprietor: Kato Hatsujo Kaisha Ltd., Yokohama-shi Kanagawa-ken (JP)
(72) Inventor: Asano, Kazunori, Kamakura-shi, Kanagawa-ken (JP)
(74) Representative: Lewald, Dietrich, Dipl.-Ing.

(56) References cited:
- JP-U- 2 025 332
- US-A- 4 552 399
- US-A- 4 657 292

## Description

### BACKGROUND OF THE INVENTION

### 1. Field of the Invention:

This invention relates to a storage device such as disposed on a dashboard of an automobile and more particularly to a storage device furnished with a safety function.

### 2. Description of the Prior Art:

Among the conventional safety function-furnished storage devices of this class is cited the one which is disclosed in Japanese Utility Model Public Disclosure No. 2-25332, which corresponds to the preamble of the claim.

The conventional storage device comprises a storage cabinet switch-movably supported in a housing formed on the dashboard side, biasing means for exerting a spring pressure on the storage cabinet to keep this storage cabinet biased constantly in the opening direction, a cam member provided with a cam groove and disposed rotatably on the housing side, and a pin member movable inside the cam groove of the cam member and disposed on the storage cabinet side, with the pin member and the cam member serving jointly as lock means, and is characterized in that a guide piece is integrally extended from the rear terminal part of the cam member, that an inertia follower is disposed slidably on the guide piece, that a tension spring is utilized to bias the inertia follower in the direction of the rear terminal part of the cam member, and that a lock cylinder for admitting the terminal part of the inertia follower is installed at a position opposite the housing.

In the conventional storage device constructed as described above, therefore, normal use thereof is attained by pushing the storage cabinet into the housing and synchronously causing the pin member to rotate the cam member in a prescribed direction and come into engagement with the lock part of the cam groove of the cam member, with the result that the storage cabinet is locked at the shutting position thereof inside the housing in spite of the spring pressure of the biasing means. When the storage cabinet presently in the shut and locked state is pushed further into the housing, the pin member is released from the engagement with the lock part of the cam groove and the cam member is allowed to rotate in the direction of opening the lock. As a result, the storage cabinet is automatically allowed to depart from the opening part of the housing and move in the opening direction by virtue of the spring pressure of the biasing means.

When the storage cabinet which is now in the locked state at the shutting position is exposed to a large inertial force arising from a collision of the automobile carrying the storage cabinet or application of sudden brakes to the automobile, the terminal part of the inertia follower disposed on the guide piece of the cam member thrusts into the lock cylinder in spite of the biasing force of the tension spring and consequently prevents the cam member from rotating in the direction of opening the lock. As a result, the possibility of the storage cabinet accidentally thrusting out of the opening part of the housing is precluded.

In the conventional storage device, therefore, since the safety function described above operates to prevent the storage cabinet from accidentally thrusting out of the opening part of the housing, the possibility of this storage device inflicting damage on the driver and the occupants of the automobile carrying the storage device is nil notwithstanding that the operating direction in which the storage cabinet is released from the lock at the shutting position is identical with the direction in which the inertial force is generated as during a collision.

Since the conventional storage device, for the purpose of acquiring the safety function capable of utilizing the operation of the inertial force in preventing the storage cabinet from accidentally thrusting out of the housing, uses the construction for causing the inertia follower to act directly on the cam member which forms the lock means in tandem with the pin member, the place for installing the inertia follower and accessorial parts thereof is limited to the lock means side. This fact entails the disadvantage that the lock means occupies an unduly large space.

Furthermore, the conventional storage device is liable to lack reliability because of the undeniable possibility that the cam member will rotate in the direction of opening the lock and accidentally expel the storage compartment from the housing before the inertia follower moves on the guide piece, when the lock-opening stroke of the storage compartment is short.

Additionally a latching mechanism or a pivotally mounted door is known from US-A-4,657,292. There an opening is opened and closed by a door for use in inserting an article into and taking it out of a housing. The instant invention on the contrary is directed to the fact, that the opening of the housing is meant for inserting a storage box containing an article to and taking the box out of the housing.

Moreover, US-A-4,552,399 shows a rotary member which is provided on a storage box fixed to an instrument panel and an engagement portion which is provided on a door pivotally supported on the storage box for engaging with a hook on the leading end of the rotary member, and discloses that the rotary member is biased in a predetermined direction not by a spring means but by the gravity of a weight provided on the rotary member. In contrast the present invention discloses a rotary member which is provided on a storage box movably supported on a housing and discloses that a stopper arm of the rotary member is biased in a predetermined direction by a spring means. With such storage boxes the problem to be solved of the instant invention does not apply.

The storage device of the present invention could be an ashtray, could be receptables for small articles or could be for instance a housing for cassettes.

In the light of the problems suffered by the conventional safety function-furnished storage device as described above, this invention has as a major object thereof the provision of a storage device which is allowed to manifest a safety function infallibly without requiring the lock means side to be unduly enlarged.

To attain the object described above, according to the invention a storage device for an automobile, furnished with a safety function is being provided, comprising:
a housing containing an opening part and having a deep wall surface;
a storage compartment having a rear terminal edge and switch-movably supported inside said housing:
biasing means for keeping said storage compartment constantly biased in an opening direction; and
lock means for controlling the switching motion of said storage compartment:
said storage compartment being caused to be locked by the operation of said lock means in a shutting position thereof inside said housing in spite of the action of said biasing means and, by pushing it into said housing, allowed to be released from the locked state at the shutting position and moved automatically into the opening direction from said opening part of said housing; characterized by said storage device comprising, for manifesting the safety function, a rotary member having a stopper arm and an inertial follower arm and rotatably disposed on said storage compartment, and spring means for biasing said rotary member so as to urge said stopper arm into a direction of a position on the inside of said rear terminal edge of said storage compartment, said rotary member being rotated only during the presence of inertial force in spite of the pressure of said spring means to cause said stopper arm to collide against said deep wall surface of said housing, said rotary member having a stopper arm and an inertial follower arm forming the shape of the letter V being provided on deep portion on an outside bottom of said storage compartment, said rotary member as a whole and said spring means being disposed in dead space defined by an inside bottom of said housing and the outside bottom of said storage compartment.

The invention as to its objects, characteristic features and advantages will be further described illustrated with reference to the accompanyig drawings without being limited to such embodiment.

### BRIEF DESCRIPTION OF THE DRAWINGS

Figure 1 is an exploded perspective view of the essential part of the storage device embodying this invention, depicting the relation of lock means and urging means.

Figure 2 is an exploded perspective view of the essential part of the storage device, depicting the relation of the safety function parts.

Figure 3 is a longitudinal cross section of the essential part of the storage cabinet, depicting the locked state thereof.

Figure 4 is a plan cross section of the essential part of the storage cabinet, depicting the locked state thereof.

Figure 5 is a longitudinal cross section of the essential part of the storage device, depicting the state in which the safety function is in operation.

Figure 6 is a plan cross section of the essential part of the storage device, depicting the state in which the safety function is in operation.

### DETAILED DESCRIPTION OF THE PREFERRED EMBODIMENT

Now, this invention will be described specifically below with reference to one embodiment illustrated in the drawings.

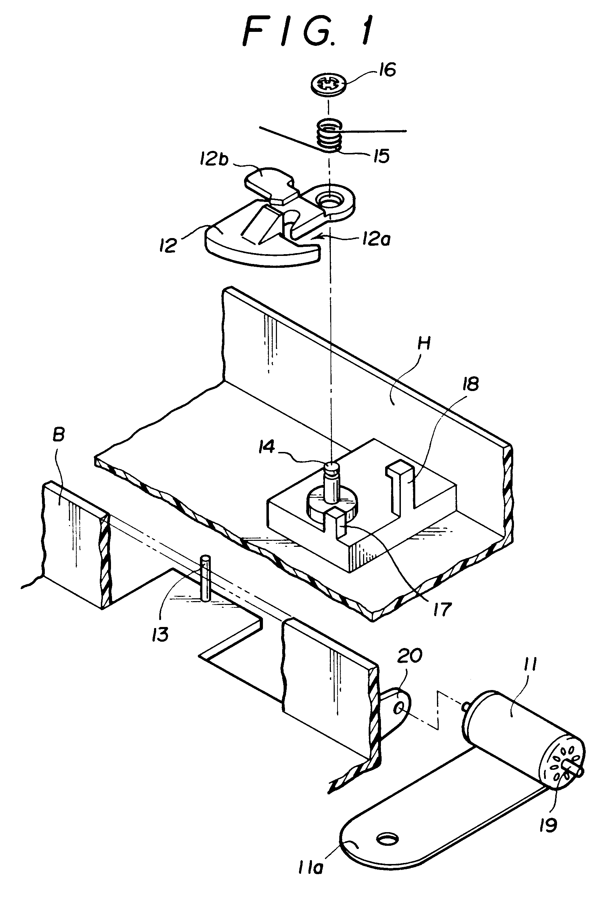

As illustrated in Figure 1, the storage device of this embodiment for an automobile is fundamentally constructed of a housing H formed on a dashboard side, a storage compartment (cabinet) B supported switch-movably inside the housing H, a constant-pressure spring 11 for keeping the storage cabinet B constantly urged in the opening direction, a cam member 12 provided with a cam groove 12a and disposed rotatably on the housing H side, and a pin member 13 adapted to move inside the cam groove 12a of the cam member 12 and disposed on the storage cabinet B side, so that the storage cabinet B is enabled, by the action of lock means formed jointly of the pin member 13 and the cam member 12, to be locked at the shutting position inside the housing H in spite of the spring pressure of the constant-pressure spring 11 and is allowed, by a further push of the storage cabinet B into the housing H, to be released from the locked state at the shutting position and moved automatically in the opening direction from the opening part of the housing H by virtue of the spring pressure of the constant-pressure spring 11.

In Figure 1, reference numeral 14 stands for a fitting shaft rotatably supporting the cam member 12 through a torsion spring 15 and a washer 16, numeral 17 for a regulating wall for regulating the position at which the cam member 12 is urged in the rotary direction, and numeral 18 for an engaging wall for securing the terminal part of the torsion spring 15 in tandem with an arm 12b of the cam member 12. The constant-pressure spring 11 functions as means for biasing the storage cabinet B by winding the spring 11 abount a winding shaft 19 in the contracting direction, fixing the winding shaft 19 to the rear terminal wall of the storage cabinet B through a bearing part 20, and fixing the free terminal part 11a of the spring 11 as with screws to the bottom surface of the housing H near the opening part thereof.

The mechanism for switch-moving the storage cabinet B is not so important for this invention. Optionally, it may be substituted by some other known mechanism which is capable of fulfilling the same function.

The present embodiment, with the construction described above as a precondition and with due attention paid to the occurrence of a dead space between the inside bottom of the housing H and the outside bottom of the storage cabinet B, contemplates having the parts capable of manifesting the safety function disposed independently in this dead space.

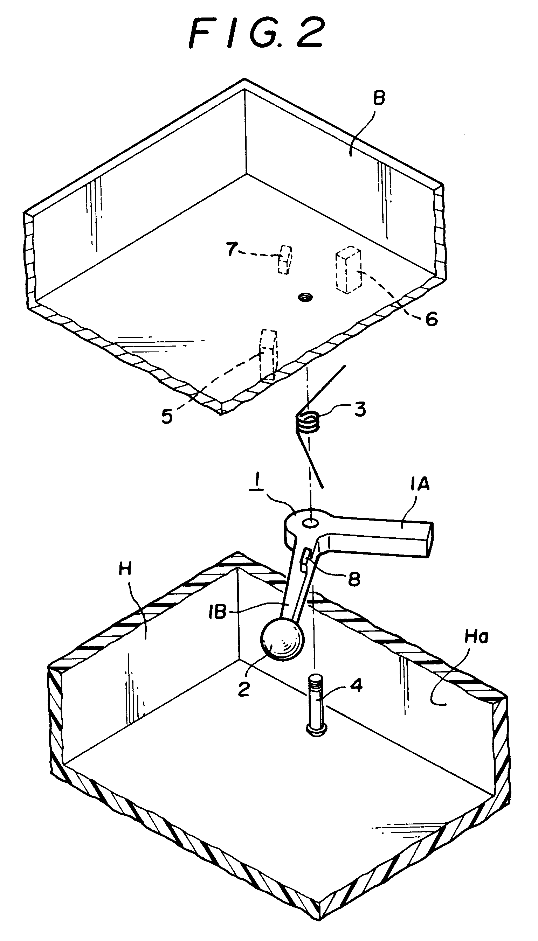

To be more specific, as illustrated in Figure 2, this embodiment is constructed of a rotary member 1 having a stopper arm 1A and an inertia follower arm 1B which substantially assume the shape of the letter V and rotatably disposed with a pivot shaft 4 at a prescribed site of the deep portion of the outside bottom of the storage cabinet B and a torsion spring 3 adapted to exert spring pressure capable of causing the rotary member 1 to urge the stopper arm 1A toward a position on the inside of the rear terminal edge of the storage cabinet B. Particularly, the stopper arm 1A is given a length large enough for its leading terminal part, when the rotary member 1 is rotated in the reverse direction, to collide against a deep wall surface Ha of the housing H and the inertia follower arm 1B is provided with a weight 2 formed integrally at the leading terminal part thereof.

Thus, the rotary member 1 of this embodiment, while the storage device is in normal service, is resiliently urged by the torsion spring 3 toward the position at which the inertia follower arm 1B collides against a first stopper 5 formed on the outside bottom of the storage cabinet B. When the rotary member 1 is rotated in the reverse direction in spite of the urging spring pressure owing to the action of the inertia follower arm 1B furnished with the weight 2, this rotation continues until the stopper arm 1A collides against a second stopper 6.

In Figure 2, reference numeral 7 stands for a first engaging part for securing one terminal part of the torsion spring 3 and numeral 8 for a second engaging part for securing the other terminal part of the torsion spring 3. The first engaging part 7, similarly to the stopper 5 and 6, is integrally formed on the outside bottom of the storage cabinet B and the second engaging part 8 is formed on the inertia follower arm 1B side of the rotary member 1.

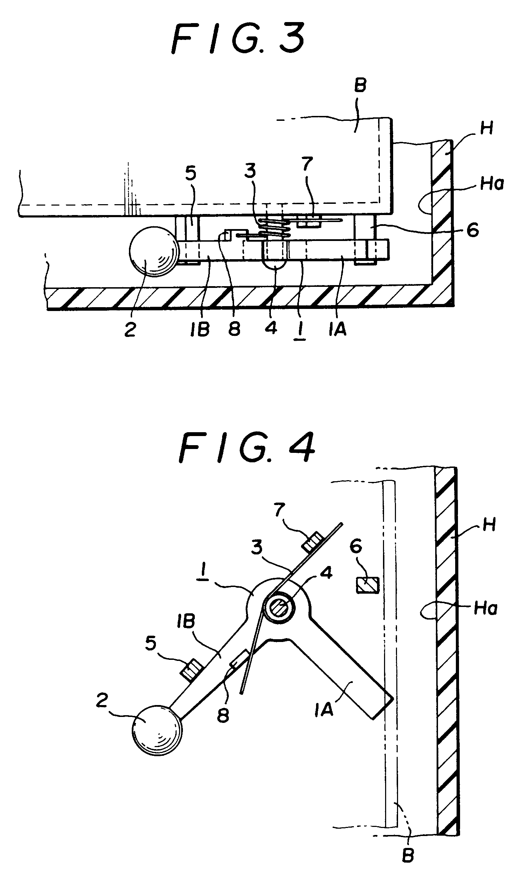

In the storage device constructed as described above, therefore, when the storage cabinet B is pressed into the housing H as practiced conventionally in spite of the spring pressure of the constant-pressure spring 11 for the sake of actuating the storage device for normal service, the pin member 13 rotates the cam member 12 in a prescribed direction and engages itself with the lock part of the cam groove 12a and the storage cabinet B is infallibly locked at the shutting position inside the housing H in spite of the spring pressure of the constant-pressure spring 11. While the storage cabinet B is in the locked state, the rotary member 1 is urged by the spring pressure of the torsion spring 3 toward the position at which the inertia follower arm 1B collides against the first stopper 5 as illustrated in Figure 3 and Figure 4. As a result, the stopper arm 1A of the rotary member 1 simply remains at the position on the inside of the rear terminal edge of the storage cabinet B.

When the storage cabinet B in the locked state is further pushed into the housing H, the pin member 13 is released from the engagement with the lock part of the cam groove 12a and the cam member 12 is allowed to rotate in the direction of opening the lock. Consequently, the lock means (12, 13) are released from the locked state at the shutting position and the storage cabinet B is automatically moved by the spring pressure of the constant-pressure spring 11 in the opening direction from the opening part of the housing H.

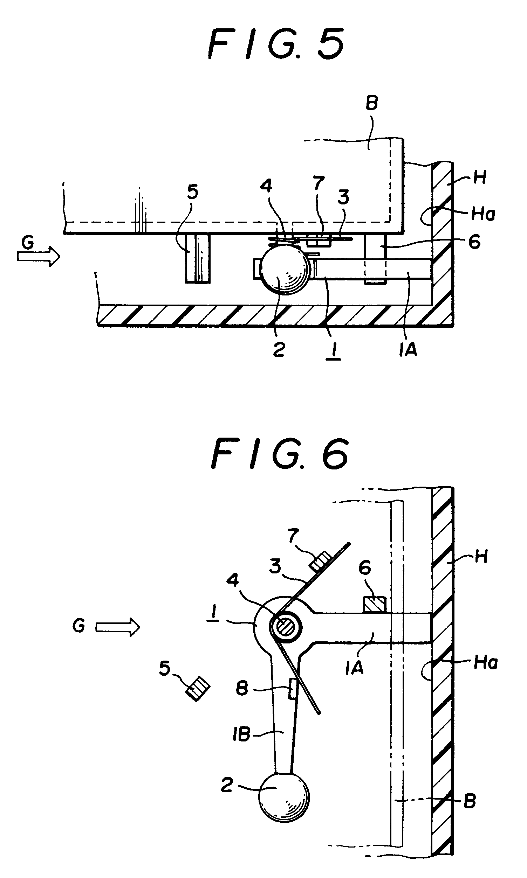

When the storage cabinet B in the locked state at the shutting position is exposed to a large inertial force G due to a collision of the automobile or application of sudden brakes, the rotary member 1 is rotated by the action of the inertia follower arm 1B furnished with the weight 2 in the reverse direction in spite of the spring pressure of the torsion spring 3 until the rotation is curbed by the second stopper 6 and the leading terminal part of the stopper arm 1A is consequently allowed to collide instantaneously against the deep wall surface Ha of the housing H as illustrated in Figure 5 and Figure 6. When the storage cabinet B, under the inertial force G, tends to move in the direction of opening the lock of the lock means, namely in the direction of the deep wall surface Haof the housing H, the motion of the storage cabinet B in that direction is infallibly stopped. As a result, the storage cabinet B is maintained at the shutting position inside the housing H and prevented from thrusting out of the housing H accidentally.

When the inertial force G ceases to exist, the rotary member 1 is automatically returned to the urging position by the spring pressure of the torsion spring 3. Thus, the normal switching operation of the storage device can be ensured.

As described above, the storage device of this invention is enabled to manifest the safety function owing to the adoption of the very simple construction having installed on the storage cabinet side the rotary member possessed of the stopper arm and the inertia follower arm. Thus, it enjoys simplicity of the construction and reliability of the performance thereof. Particularly, the fact that the safety function is completely separated from the lock means ensures thorough preclusion of the possibility of the lock means taking up an unduly large space as experienced with the conventional storage device and, at the same time, permits effective utilization of the dead space formed between the housing and the storage cabinet. Thus, the possibility of the storage cabinet offering only a limited space for storage is eliminated.

## Claims

1. A storage device for an automobile, furnished with a safety function, comprising:
a housing (H) containing an opening part and having a deep wall surface;
a storage compartment (B) having a rear terminal edge and switch-movably supported inside said housing (H):
biasing means (11) for keeping said storage compartment (B) constantly biased in an opening direction; and
lock means (13, 12) for controlling the switching motion of said storage compartment (B):
said storage compartment (B) being caused to be locked by the operation of said lock means (13, 12) in a shutting position thereof inside said housing (H) in spite of the action of said biasing means (11) and, by pushing it into said housing (H), allowed to be released from the locked state at the shutting position and moved automatically into the opening direction from said opening part of said housing (H); characterized by
said storage device comprising, for manifesting the safety function, a rotary member (1) having a stopper arm (1A) and an inertial follower (1B) arm and rotatably disposed on said storage compartment (B), and spring means (3) for biasing said rotary member (1) so as to urge said stopper arm (1A) into a direction of a position on the inside of said rear terminal edge of said storage compartment (B), said rotary member (1) being rotated only during the presence of inertial force in spite of the pressure of said spring means to cause said stopper arm (1A) to collide against said deep wall surface (Ha) of said housing, said rotary member (1) having a stopper arm (1A) and an inertial follower arm (1B) forming the shape of the letter V being provided on a deep portion on an outside bottom of said storage compartment (B), said rotary member (1) as a whole and said spring means (B) being disposed in dead space defined by an inside bottom of said housing (H) and the outside bottom of said storage compartment (B).

## Patentansprüche

1. Verstauungseinrichtung für ein Automobil, versehen mit einer Sicherheitsfunktion, umfassend:
ein Gehäuse (H), das einen öffnungsteil mit einer vertieften Wandfläche enhält;
ein Stauabteil (B) mit einer hinteren Endkante, das schaltbeweglich innerhalb dieses Gehäuses (H) abgestützt ist:
Vorspannmittel (11), die dieses Stauabteil (B) konstant in einer Öffnungsrichtung vorgespannt halten; und
Sperrmittel (13, 12), die die Schaltbewegung dieses Stauabteils (B) kontrollieren:
wobei dieses Stauabteil (B) veranlaßt wird, durch die Betätigung der Sperrmittel (13, 12) in einer Schließposition hiervon innerhalb dieses Gehäuses (H) trotz der Wirkung dieser Vorspannmittel (11) verriegelt zu werden und das, indem es in dieses Gehäuse (H) eingeschoben wird, die Möglichkeit erhält, aus dem gesperrten Zustand in der Schließposition freigegeben und automatisch in die Öffnungsrichtung von diesem Öffnungsteil dieses Gehäuses (H) bewegt zu werden, **dadurch gekennzeichnet**, daß diese Verstauungseinrichtung umfaßt, um die Sicherheitsfunktion zu bestätigen, ein Drehelement (1) mit einem Stopperarm (1A) und einem Trägheitsstößel-(1B)-Arm, drehbar auf diesem Stauabteil (B) gelagert, sowie Federmittel (3), um dieses Drehelement (1) zu beaufschlagen, so daß dieser Stopperarm (1A) in einer Richtung einer Position auf der Innenseite dieser hinteren Endkante dieses Stauabteils (B) beaufschlagt wird, dieses Drehelement (1) nur während des Vorhandenseins dieser Trägheitskraft trotz des Drucks dieser Federmittel gedreht wird, wodurch dieser Stopperarm (1A) gegen diese nach unten gezogene oder tief gehende Wandfläche (Ha) dieses Gehäuses anstößt, wobei dieses Drehelement (1) über einen Stopperarm (1A) und einen Stößelträgheitsarm (1B) verfügt, der in der Gestalt eines Buchstabens V vorliegt und auf einem tiefen Teil auf einem außenseitigen Boden dieses Stauabteils (B) vorgesehen ist, wobei das Drehelement (1) als ganzes sowie dieses Federmittel (B) im Totraum angeordnet sind, der durch einen innenseitigen Boden dieses Gehäuse (H) und den außenseitigen Boden dieses Stauabteils (B) definiert ist.

## Revendications

1. Dispositif de rangement à fonction de sécurité pour véhicule automobile, qui comprend :
un logement (H) comportant une ouverture et présentant une surface de paroi profonde ;
un compartiment de rangement (B) ayant un bord terminal arrière et supporté de façon mobile en va-et-vient à l'intérieur dudit logement (H) ;
des moyens de rappel (11) pour maintenir ledit compartiment de rangement (B) constamment sollicité dans une direction d'ouverture; et
des moyens de verrouillage (13,12) pour commander le mouvement de va-et-vient dudit compartiment de rangement (B) ;
ledit compartiment de rangement (B) étant bloqué par le fonctionnement desdits moyens de verrouillage (13,12) dans sa position de fermeture à l'intérieur du dit logement (H) malgré l'action desdits moyens de rappel (11), et ledit compartiment de rangement, lorsqu'on le pousse plus loin dans ledit logement (H), pouvant être libéré de l'état bloqué à la position de fermeture et déplacé automatiquement dans la direction d'ouverture à partir de ladite ouverture dudit logement (H) ;
caractérisé en ce que ledit dispositif de rangement comprend, pour remplir la fonction de sécurité, un élément rotatif (1) comportant un bras de butée (1A) et un bras sensible à l'inertie (1B) et étant monté de façon tournante sur ledit compartiment de rangement (B), et des moyens élastiques (3) pour rappeler le dit élément rotatif (1) de façon à solliciter ledit bras de butée (1A) dans la direction d'une position du côté intérieur dudit bord terminal arrière dudit compartiment de rangement (B), ledit élément rotatif (1)tournant, seulement pendant la présence d'une force d'inertie, contre la pression desdits moyens élastiques de manière à amener ledit bras de butée (1A) en contact contre ladite surface de paroi profonde (Ha) du dit logement, ledit bras rotatif (1) comportant un bras de butée (1A) et un bras sensible à l'inertie (1B) qui définissent la forme de la lettre V et étant monté sur une partie profonde d'une face extérieure du fond dudit compartiment de rangement (B), ledit élément rotatif (1) dans son ensemble et lesdits moyens élastiques (11) étant disposés dans l'espace mort défini par une face intérieure du fond dudit logement (H) et la face extérieure du fond dudit compartiment de rangement (B).
